# EUROPEAN PATENT SPECIFICATION

(11) **EP 3 286 654 B1**
(45) Date of publication and mention of the grant of the patent: **27.10.2021**
(21) Application number: 16783594.1
(22) Date of filing: 11.04.2016
(51) Int. Cl.: G06F 13/38

(54) **MEMORY MODULE AND SYSTEM AND METHOD OF OPERATION**
SPEICHERMODUL UND -SYSTEM UND VERFAHREN ZUM BETRIEB
MODULE DE MÉMOIRE ET SYSTÈME ET PROCÉDÉ DE FONCTIONNEMENT

(30) Priority: 20.04.2015 US 201562150272 P; 07.05.2015 US 201514706873
(43) Date of publication of application: 28.02.2018
(73) Proprietor: Netlist, Inc., Irvine, CA 92618 (US)
(72) Inventor: LEE, Hyun, Ladera Ranch, CA 92694 (US)
(74) Representative: Bosch Jehle Patentanwaltsgesellschaft mbH
(86) International application number: PCT/US2016/026874
(87) International publication number: WO 2016/171934

(56) References cited:
- EP-A2- 2 737 383
- US-A1- 2007 130 416
- US-A1- 2007 288 683
- US-A1- 2014 156 920
- US-A1- 2014 223 068
- US-A1- 2014 244 923
- US-A1- 2015 003 175

## Description

### FIELD

The disclosure herein is related generally to memory modules, and more particularly to memory modules having both volatile and non-volatile subsystems, and system and method of operating the same.

### BACKGROUND

Computer systems such as network servers, personal computers, PDAs, mobile phones, video games, scientific instruments, industrial robotics, medical electronics, and so on, rely heavily on the capacity and throughput of their system or main memories and the speed of accessing them for optimal performance. Currently, dynamic random-access memory (DRAM) is commonly used as system memory. DRAM is a type of random-access memory that stores each bit of data in a separate capacitor in an integrated circuit. The capacitor can be either charged or discharged so that these two states are taken to represent the two values of a bit, conventionally called 0 and 1. Since capacitors leak charge, the information eventually fades unless the capacitor charge is refreshed periodically. Because of this refresh requirement, it is a dynamic memory as opposed to SRAM and other static memory.

The structural simplicity of DRAM allows DRAM chips to reach very high densities, because billions of transistor and capacitor pairs can fit on a single memory chip. On the other hand, DRAM is volatile memory - it loses its data quickly when power is removed. Compared to Flash memory, which is a type of electronic non-volatile computer storage medium that can be electrically erased and reprogrammed, DRAM is also much more expensive. For example, high density DRAM can cost as much as 20 times more than high-performance Flash devices. Furthermore, Flash chips can have much higher density than DRAM chips, allowing a same-sized memory module to pack much more to reach a much larger memory capacity.

US Patent Publication No. 2015/003175 A1 by Raj K Ramanujan describes a memory device comprising a volatile memory, a nonvolatile memory, and a controller comprising a memory buffer and logic in a controller to transfer data between the non-volatile memory and the volatile memory via the memory buffer in response to requests from an application, wherein data in the memory buffer is accessible to the application. The controller receives a page-in request from an application, and copies the requested page of data from nonvolatile memory to the memory buffer. The controller then receives a read request, and in response to the read request the controller supplies the page from the memory buffer to the volatile memory and releases the buffer. As the application reads the data, the controller writes the page data to the volatile memory and invalidates the buffer on a cache line-by-cache line basis.

It is an object of the present invention to overcome the above mentioned problems of the prior art. This object is achieved by the memory module according to claim 1 as well as by the method of operation of a memory module according to claim 10. Further advantageous embodiments of the present invention are indicated in claims 2 to 9, and 11 to 16.

### BRIEF DESCRIPTION OF THE DRAWINGS

FIG. 1 is a block diagram of a computer or server system according to certain embodiments.
FIG. 2 is a block diagram of a software stack of the computer or server system according to certain embodiments.
FIG. 3 is a block diagram of a memory module having both DRAM an Flash memory according to certain embodiments.
FIG. 4 is a block diagram of a module controller in the memory module according to certain embodiments.
FIG. 5 is a block diagram of a control logic circuit in the module controller according to certain embodiments.
FIG. 6 is block diagram illustrating a physical memory address space of the memory module according to certain embodiments.
FIG. 7 is a flowchart of data transfers in response to a page fault in the computer or server system according to certain embodiments.
FIGS. 8-10 are diagrams illustrating various data transfers on the memory module according to certain embodiments.
FIG. 11 is a timing diagram illustrating interleaving of page-in data flow with normal memory accesses to avoid data access conflicts according to certain embodiments
FIG. 12 is a flowchart illustrating a status report process according to certain embodiments.
FIG. 13 is a block diagram illustrating status registers on the memory module according to certain embodiments.
FIG. 14 is a block diagram illustrating a system memory address space in the computer or server system according to certain embodiments.

### DESCRIPTION OF THE EMBODIMENTS

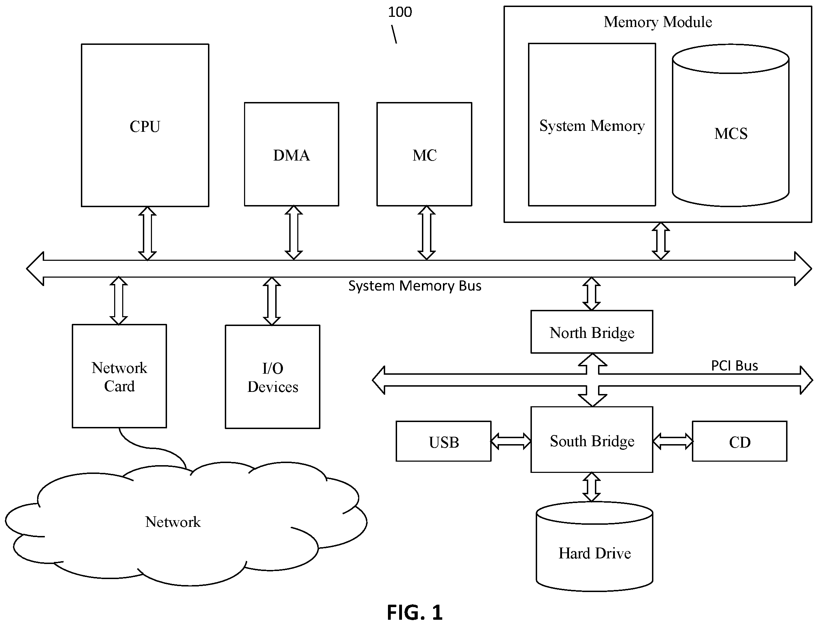

As shown in FIG. 1, a computer or server system (computer system) 100 according to certain embodiments includes a central processing unit (CPU) or processor, a memory controller (MC), a system memory bus, one or more memory modules coupled to the memory controller via the system memory bus. The one or more memory modules include one or more Hypervault™ (HV) memory modules that provide a system memory, and may further provide memory channel storage (MCS). In certain embodiments, the MC may be integrated into the CPU. In further embodiments, the computer system may also include a direct data management controller (DMA) also coupled to the system bus. The CPU with or without the MC and/or the DMA, or the computer system 100 in part or in while, is sometimes referred to hereafter as the "System" or "system."

In certain embodiments, the computer system 100 may further include a network card and one or more I/O devices such as keyboard, monitor, touchscreen, microphone, speaker, etc. The network card may or may not be integrated into the CPU and provides network interface functions (wired or wireless) between the computer system 100 and local and/or wide area networks. The computer system 100 may further include a PCI bus, which is coupled to a north bridge, which is coupled to the memory controller via the memory bus or incorporated into the memory controller. One or more storage devices, such as a hard drive, a CD/DVD drive, and a USB drive, via a south bridge are coupled to the PCI bus.

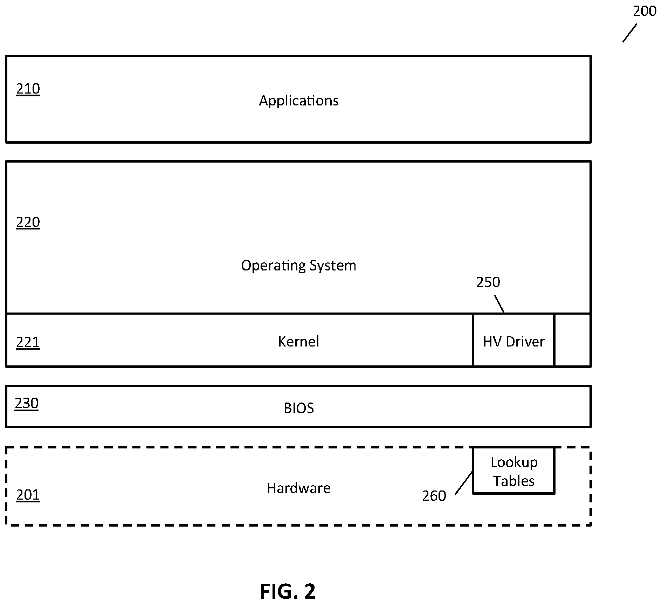

In addition to the hardware components shown in FIG. 1, the computer system 100 also includes software/firmware components. In certain embodiments, the software/firmware components can be roughly represented as a stack of software/firmware layers 200 over a hardware layer 201. As shown in FIG. 2, the stack of software/firmware layers 200 includes an applications layer 210 sitting on an operating system layer 220. The applications 210 are software programs that perform specific tasks. The operating system 220 manages the hardware and software resources of the computer system 100 and acts as an intermediary between the application programs 210 and the hardware components of the computer system 100.

The operating system 220 includes a kernel 221, which are computer programs that manages input/output requests from other software programs (or processes), and which translates the requests into data processing instructions for the CPU and/or other hardware components of the computer system 100. The kernel can include an interrupt handler that handles all requests or completed I/O operations that compete for the kernel's services, a scheduler that determines which programs share the kernel's processing time in what order, and a supervisor that actually gives use of the computer to each process when it is scheduled. The kernel may also include a manager of the operating system's address spaces in memory or storage. The kernel's services are requested by other parts of the operating system or by applications through a specified set of program interfaces sometimes referred to as system calls.

Between the kernel and the hardware layer is the basic input/output system (BIOS) layer 230, which in certain embodiments is firmware stored in some sort of permanent memory (e.g., programmable read-only memory (PROM), or electrically programmable read-only memory (EPROM)), or Flash memory, and includes program codes for initializing and testing the system hardware components, and to load the operating system from a mass memory device when the computer system 100 is boot up. The BIOS may additionally provide an abstraction layer for the hardware components so as to provide a consistent way for application programs and operating systems to interact with the hardware components such as the system memory and input/output devices.

In certain embodiments, the software stack further includes an HV driver 250 in, for example, the kernel. The HV driver 250 is a software program for controlling system access to the HV memory module so that the HV memory module can operate like a standard Dual In-Line Memory Module (DIMM), such as Double Data Rate (DDR) 3 registered DIMM (RDIMM), or DDR3 Load Reduction DIMM (LRDIMM), DDR4 RDIMM, or DDR4 LRDIMM, without requiring any changes to the BIOS. The HV driver 250 has access to a memory space 260 in the CPU and certain memory locations used to store lookup tables or other configuration information, which the HV driver 250 can consult with and/or update as needed. In certain embodiments, the driver intercepts certain system calls to access the HV memory module and directs the memory controller to send control, address and data signals in response to the system calls and in compliance with the memory interface standard the system is using (e.g., the Joint Electron Device Engineering Council (JEDEC) DDR3 or DDR4 RDIMM or LRDIMM Standard), as discussed in further detail below.

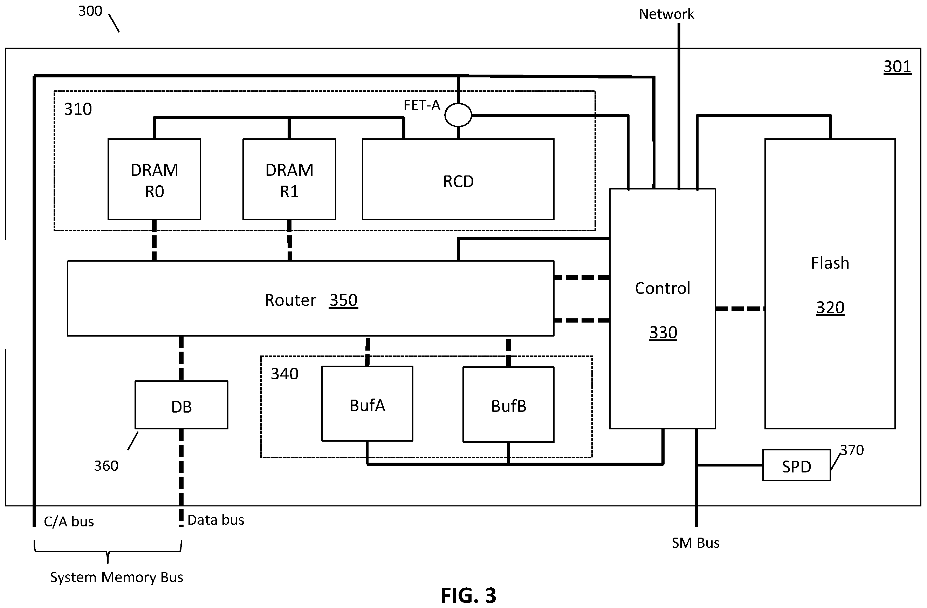

FIG. 3 is a block diagram of a Hypervault™ dual-in-line memory module (HVDIMM) 300, which can be used to provide the system memory and/or the MCS of the computer/server system 100 according to certain embodiments. As shown in FIG. 3, the HVDIMM 300 includes a volatile memory subsystem (HV-DRAM) 310, a non-volatile memory subsystem (HV-Flash 320) 320, and a module control subsystem (HV Control) 330, mounted on a module board 301, which may include one or more printed circuit boards. The HVDIMM 300 may also include buffer memory 340, and may also include a network interface controller (HV-NIC). The HVDIMM 300 may also include a data routing or router circuit 350 including, for example, switching circuits (e.g., Field-effect transistor or FET switches) and/or multiplexors, that selectively routes data signals between the HV-DRAM 310 and the system memory bus, the HV-DRAM 310 and HV Control 330, the HV-DRAM 310 and the buffer memory 340, the buffer memory 340 and the HV Control 330, and/or the buffer memory 340 and the system memory bus, under the control of the HV Control 330. The HVDIMM may further includes data buffer circuitry 360 that buffers read/write data between the system and the HVDIMM 300. The HVDIMM 300 further includes data signal lines (as represented by the dashed lines) and control/address (C/A) signals lines (as represented by the solid lines).

As shown in FIG. 3, the HVDIMM 300 is coupled to the system memory bus and may be further coupled to a system management (SM) bus using, for example, the I²C protocol or a variant thereof The system memory bus includes control/address (C/A) signal lines and data/strobe (DQ/DQS) signal lines. The C/A signal lines are coupled to the register control device (RCD) in the HV-DRAM 310 during normal operations, and are further coupled to the HV Control 330. Thus, both the RCD and the HV Control 330 may respond to C/A signals from the system. In certain embodiments, the HV-DRAM 310 further includes a switching circuit (e.g., an FET switch, FET-A), which can be controlled by the HV Control 330 to couple the RCD to either the C/A bus and the HV Control 330 such that the HV-DRAM 310 either responds to C/A signals from the system during, for example, normal operations when the system accesses the DRAM address spaces in the HVDIMM 300, or to C/A signals from the HV Control 330 during, for example, backup/restore operations when the HVDIMM 300 backs up the content in the HV-DRAM 310 after a power failure or restore the content back into the DRAM after power is resumed.

In certain embodiments, the HV Control 330 is configured to monitor the C/A signals from the memory controller and to recognize and act upon C/A signals formulated in response to system calls to access the HV-Flash 320 and/or the buffer memory 340.

In certain embodiments, the buffer memory 340 includes DRAM, such as terabyte DRAM memory (TBM), or SRAM. The buffer memory 340 is used to temporarily store data so as to make data transfers in the buffer memory 340 faster and more efficient. Since normally data may be transferred in and out of Flash memory at a slower speed than data is transferred to and from the system, the buffer memory 340 is used to buffer data to/from the Flash memory so the system does not have to slow down and wait for data to be written to or read from the HV-Flash 320. When the system writes data to the HV-Flash 320, the data is buffered into the buffer memory 340 at DRAM data I/O speed, which is much faster than Flash data I/O speed. The buffered data can be written into the Flash memory on, for example, First-in First-out (FIFO) basis. The same is true for the read direction. Thus, while reading from the HV-Flash 320, the CPU can engage in other processes with the main memory until the buffer memory 340 has buffered a predetermined amount of data for transferring to the main memory or the system at the DRAM speed. On the other hand, when data is transferred from the main memory to the storage, the data is read from the HV-DRAM 310 according to a set of control/address (C/A) signals from the system or the HV Control 330, and written into the buffer memory 340 according to another set of C/A signals from the HV Control 330. While the DRAM can be engaged with the system on other tasks, the HV Control 330 can transfer the data from the buffer memory 340 to the HV-Flash 320 by reading the data from the buffer memory 340 and writing the data to the storage. In further embodiments, the buffer memory 340 may include two sets of buffer memory, BufA and BufB.

In certain embodiments, the HV-DRAM 310 may include multiple ranks (e.g., DRAM R1 and DRAM R2) of double data rate (e.g., DDR3 or DDR4) DRAM devices and a register control device (RCD). In certain embodiments, the HV-Flash 320 includes MLC NAND Flash, which are partitioned to support fast access as well as enhance the error correction capability for virtual duplication. In certain embodiments, the HV-FLASH 320 includes a number of (e.g., 9) standard embedded multi-media card (eMMC) packages each having an embedded multi-media interface, as discribed in U.S. Patent Application No. 14/536,588, filed November 7, 2014, entitled "Hybrid Memory Module and System and Method of Operating the Same,".

In certain embodiments, the HVDIMM 300 further includes a seriel presence detect (SPD) device 370 accessible by the system via the SM bus. The SPD device 370 includes non-volatile memory such as electrically erasable and programmable read only memory (EEPROM) for storing therein key parameters of the HVDIMM 300, such as basic memory type, module data widths, timing parameters, memory density (e.g., size of each bank), manufacturer ID, serial number, etc. These key parameters are generally written by the manufacturers. During system boot up, the BIOS reads the SPD information to configure the memory controller.

The components in the HVDIMM 300, e.g., the HV Control 330, the main memory subsystem (or volatile memory subsystem), the buffer memory 340, the HV-Flash 320 (or non-volatile memory subsystem), can be mounted on a same printed circuit board or disposed in close proximity to each other to allow fast and smooth data transfer therebetween.

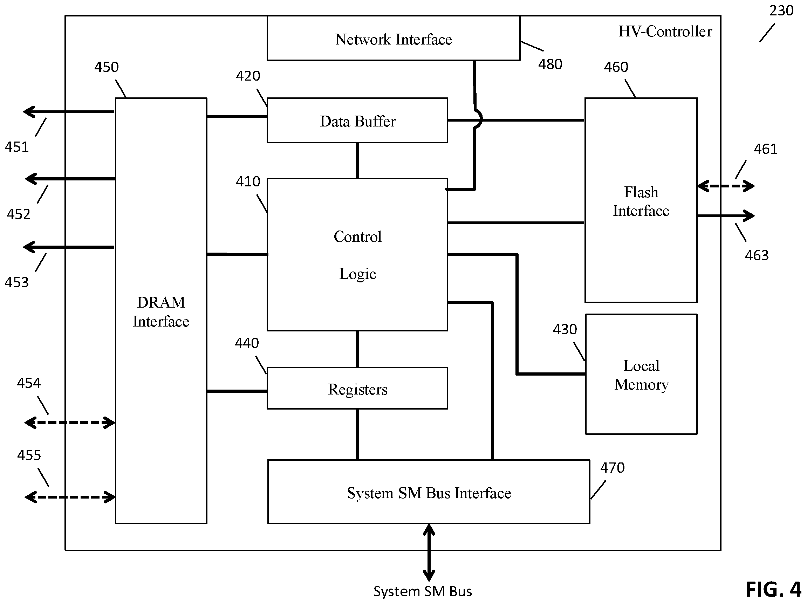

FIG. 4 is a block diagram of the HV Control 330 according to certain embodiments. The HV Control 330 can be implemented using one or more application-specific integrated circuits (ASIC) and/or programmable field gate array (FPGA) devices. As shown in FIG. 4, the HV Control 330 includes control logic 410, a data buffer 420, local memory 430 and registers 440. The HV Control 330 further includes a DRAM interface 450, a Flash interface 460, a system management Bus interface 470, and a network interface 480. In certain embodiments, the HV Control 330 controls data transfers between the HV-DRAM 310 and HV-Flash 320. It keeps an address management table in the local memory on-chip memory space, operates the router 350 and the switching circuit FET-A, and generates proper commands and address signals to the HV-DRAM 310, HV-Flash 320 and the buffer memory 340 to control the data transfers therebetween.

In certain embodiments, the Flash interface is coupled to the HV-FLASH 320 via data signal lines 461 and control/address signals lines 463, the DRAM interface 450 provides multiple sets of C/A signal lines to control different DRAMs on the memory module 300 at the same time. For example, the C/A signal lines 451 is used to transmit C/A signals to the HV-DRAM 310 during backup/restore operations, and, when both BufA and BufB are provided in the buffer memory 340, C/A signal lines 452 is used to transmit C/A signals to BufA in the buffer memory 340, and the C/A signal lines 453 is used to transmit C/A signals to BufB in the buffer memory 340, so that BufA and BufB can be involved in different data transfer activities concurrently. The DRAM interface 450 also provides multiple sets of DQ/DQS signal lines (e.g., 454 and 455) that are coupled to the router 350 so that the HV Control 330 can handle multiple data transfers concurrently. For example, while data is being transferred between BufB and the HV-FLASH 320, the HV Control 330 can perform error correction on data buffered in BufA.

In certain embodiments, the HVDIMM 300 can be operated to back up data in the DRAM in response to power failure events. The HV Control 330 provides correct timings for HV-DRAM 310 to be operated in an DLL-off mode when data in the DRAM is being transferred to the Flash. The HV Control 330 also provides proper operational procedure for the back-up and restore processes. The switching circuit, FET-A, can be configured to isolate the RCD 320 and to allow the RCD 320 to receive C/A signals from the HV Control 330 during the back-up and restore processes. The HV Control 330 also controls the router 350 to route data from the HV-DRAM 310 to the HV Control 330 during backup operations and to route data from the HV Control 330 to the HV-DRAM 310 during restore operations.

In certain embodiments, the the system can access the HVDIMM 300 via the SM bus. For example, the system can use the SM bus to configure the HV Control 330 by setting certain registers in the HV Control 330. The HV Control 330 can also use the SM bus to notify the system when certain operation is completed or when an error is encountered, either using a preconfigured interrupt signal, or by updating a predefined status register in the system bus interface of the HV Control 330, or in the DMA.

In certain embodiments, the HV Control 330 also manages network interfaces between the HVDIMM 300 and any local or wide-area networks in conjunction with HV-NIC so as to facilitate direct data transfers between the HVDIMM 300 and other storage devices in the local or wide-area networks. In certain embodiments, the HV Control 330 includes a network interface and/or is coupled to a network interface card (HV-NIC), which can take the data from the HV-DRAM 310 and/or HV-Flash 320, and constructs network packets with proper source and destination addresses. In general, the source address is preconfigured by the system. In certain embodiments, the HV-NIC or network interface and some or all of the other components of the HV Control 330 can be embedded into a same ASIC or FPGA.

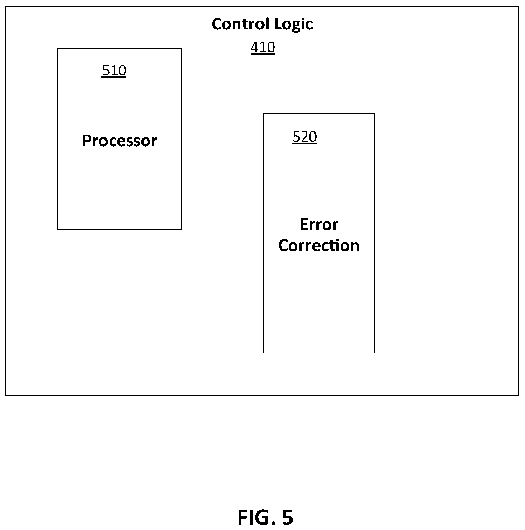

In certain embodiments, as shown in FIG. 5, the control logic 410 includes logic circuits and/or one or more processing units or processors 510 that monitors the C/A signals from the system, generates the C/A signals for the HV-DRAM 310 and/or the buffer memory 340 coupled to the DRAM interface 450 and/or the C/A signals for the HV-Flash 320 coupled to the Flash interface 460, and controls the router 350 and the switching circuit FET-A, in response to the C/A signals from the system. In certain embodiments, the logic circuits and/or processors can be configured to pre-process data being transferred from the Flash to the DRAM, so as to save DRAM memory space and reduce data traffic in the memory channel by off-loading some of the computing work traditionally done by the CPU, as discribed in U.S. Provisional Patent Application No. 62/041,024, filed August 22, 2014, entitled "Apparatus and Methods for Transferring Storage Content,". In certain embodiments, the HV Control 330 also includes an error correction circuit 520 executing error detection/correction routines to insure the integrity of data transferred from the HV-Flash, as discribed in U.S. Patent Application No. 14/536,588, filed November 7, 2014, entitled "Hybrid Memory Module and System and Method of Operating the Same,".

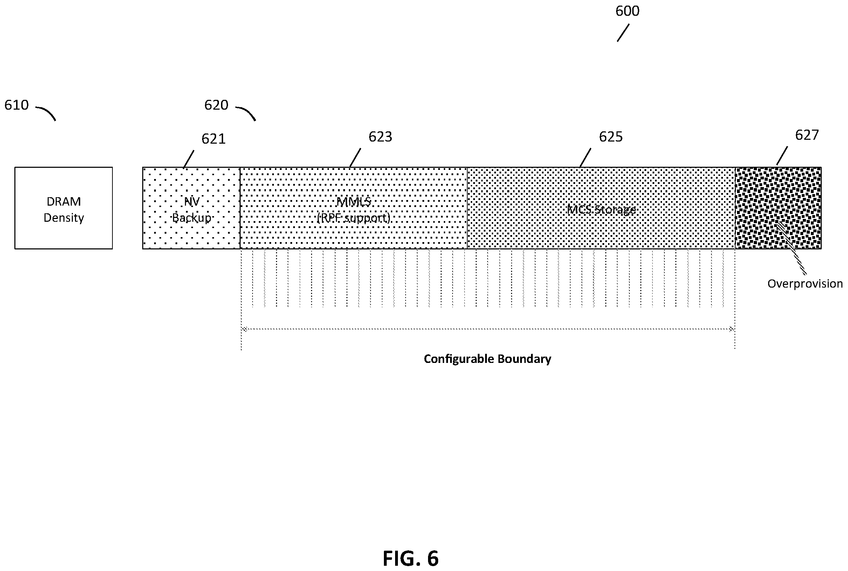

FIG. 6 illustrates a memory space 600 provided by the HVDIMM 300 according to certain embodiments. As shown in FIG. 6, the memory space 600 includes a HV-DRAM space 610 and a HV-FLASH space 620. The HV-Flash space 620 is partitioned into a plurality of areas, including a non-volatile (NV) backup area 621, a main memory local storage (MMLS) area 623, an MCS Storage area 625 , etc. each of which can be used to support a different function of the HV memory. For example, the NV backup area can be used to store a copy of the content in the HV-DRAM during power outage; and the MMLS area can be used as a swap space, and/or to function as part or all of the main memory. In certain embodiments, working data for random access by the system is stored in DRAM data format in the MMLS area. The MCS area can be used as traditional Flash storage. In certain embodiments, the memory space in the Flash memory also includes an overprovision area, which provides extra storage capacity. In certain embodiments, the overprovision area is hidden from the system and is used to improve performance by distributing writes and erases across a larger population.

The HV-DRAM space 610 includes the physical memory space for random access by the system. This space can be shared by multiple processes or applications running on the system 100. In order to manage the memory space 610 efficiently, the system 100 may provide an abstraction of its main memory known as virtual memory or virtual address space, which maps memory addresses used by a program (i.e., virtual addresses, into physical addresses in the HV-DRAM 310. To implement virtual memory, the system 100 may include a memory management unit (MMU) that keeps track of the pages and their address translations. When a running program tries to access data in a memory page that is mapped into the virtual address space of the system, but not loaded in the physical memory provided by the HV-DRAM 310, a page fault occurs, and the system may raise an interrupt, which prompts the HV driver 250 to handle the page fault by causing the memory module 300 to move the requested data from the HV-FLASH 320 to the HV-DRAM 310, so as to allow the program to continue operation as if the page fault had not occurred.

In certain embodiments, for operations involving the HV-Flash 320 or buffer memory 340, such as a swap-in or swap-out operation, the HV driver 250 sends a NV access request to the memory controller when it needs to transfer data between DRAM (main memory) and Flash (storage) and provides the DRAM and the Flash addresses with this request. Afterwards, the HV driver 250 and the HV Control 330 work together to move data in or out of the HV-DRAM 310 without causing conflict with normal system accesses to the main memory. In certain embodiments, the memory controller may interleave the storage accesses with normal system memory accesses.

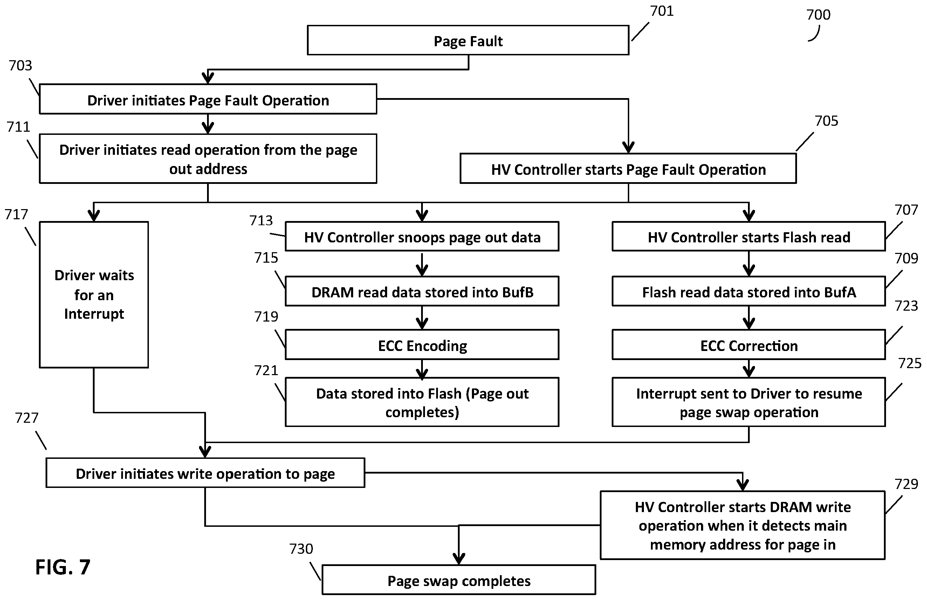

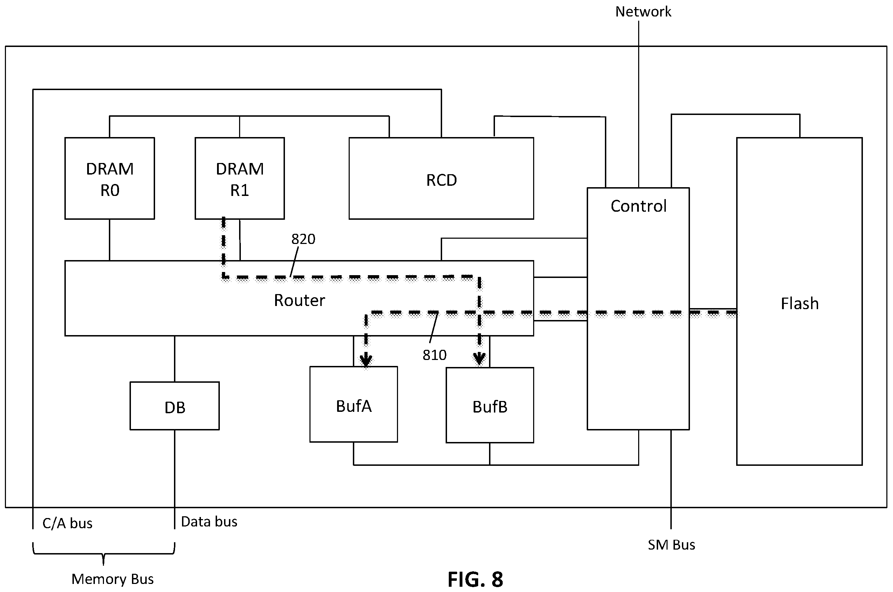

For example, FIGS. 7-10 illustrate a process 700 carried out by the HV driver 250 and the HV Control 330 in response to a page fault 701. As shown in FIG. 7, the HV driver 250 initiates a page-fault operation (703) by causing the memory controller to send a first set of C/A signals via the C/A bus to the HVDIMM 300 and a first set of data signals associated with the first set of C/A signals via the data bus to the HVDIMM 300. In certain embodiment, the first set of C/A signals includes a write command that is not directed at the HV-DRAM 310. For example, the C/A signals may include one or more chip select signals, none of which is asserted to select any of the ranks in the HV-DRAM 310. The first set of data signals include further information for the page fault operation such as one or more address locations in the HV-FLASH where the requested data is to be retrieved. The HV Control 330 recognizes the first set of C/A signals and starts the page fault operation on the DIMM (705) by directing the router 350 to route the first data signal to the HV Control 330 instead of the HV-DRAM 310. The HV Control 330 then starts Flash reads (707) by generating Flash C/A signals based on the first set of C/A signals and based on the first data signal received from the memory controller, causing the HV-Flash to output page-in data that is to be loaded in DRAM. The HV Control 330 can cause the page-in data to be stored in BufA (709) by directing the router 350 to form a data path 810, as shown in FIG. 8, and sends a set of C/A signals to BufA ahead of the page-in data according to the timing requirements of the memory devices in BufA.

Concurrently, the HV driver 250 continues to handle the page fault operation. The HV driver 250 may swap some data out of the HV-DRAM 310 to make space for the memory page that is to be loaded in DRAM. In certain embodiments, the HV driver 250 does this by causing the memory controller to send a second set of C/A signals including a read command and a read address (711), which causes the HV-DRAM to output page-out data. The second set of C/A signals are received by both the RCD and the HV Control 330. The HV Control 330 recognizes the second set of C/A signals as being part of the page fault operation because the read address is related to the address in the first set of C/A signals. In response, the HV Control 330 snoops the page-out data (713) by directing the router 350 to form a data path 820 (as shown in FIG. 8) to route the page-out data into BufB. The HV Control 330 also causes the page-out data to be written into BufB (715) by sending a set of C/A signals to BufB ahead of the page-out data according to the timing requirements of the memory devices in BufB. The data may also be routed directly to the HV Control 330 and written to BufB afterwards. At least a portion of the page-out data is written into BufB concurrently with at least a portion of the page-in data being written into BufA (709)

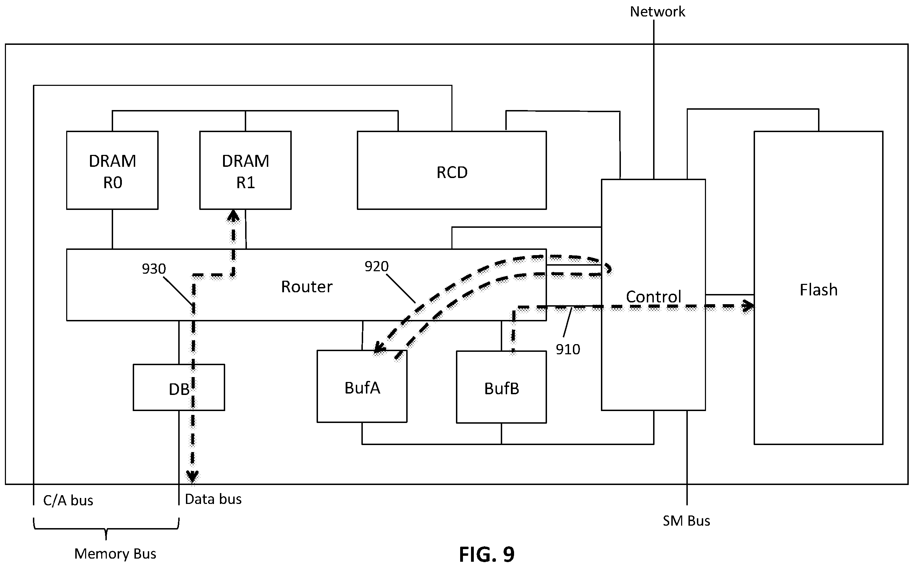

The HV driver 250 now waits (717) as the HVDIMM 300 continues the data transfers discussed above. In certain embodiments, the HV Control 330 may add error correction codes (ECC) to the page-out data (719), as discussed in U.S. Patent Application No. 14/536,588, filed November 7, 2014, entitled "Hybrid Memory Module and System and Method of Operating the Same,". In certain embodiments, ECC coding is done as the page-out data is being transferred to the HV-FLASH 320 via a data path 910 through the HV Control 330, as shown in FIG. 9. The HV Control 330 also sends Flash C/A signals to cause the ECC encoded page-out data to be stored in the HV-Flash (721). In certain embodiments, the HV Control 330 manages HV-Flash 320 addresses and keeps track of physical Flash addresses in relation to virtual/physical addresses known to the system. This can be done by creating and updating an address-mapping table, which maps the system (virtual/physical) addresses to the Flash physical addresses. HV Control 330 uses the address-mapping table to correctly place page-out data into proper locations in HV-FLASH 320.

The HV Control 330 may perform error correction on the page-in data read out from the HV-Flash (723), as discussed in U.S. Patent Application No. 14/536,588, filed November 7, 2014, entitled "Hybrid Memory Module and System and Method of Operating the Same,". In certain embodiments, the HV Control 330 does so by forming a data path 920 in the router 350, as shown in FIG. 9, which allows the HV Control 330 to read the page-in data stored in BufA, perform error detection and correction on the page-in data, and store the corrected page-in data back into BufA. Depending on the size of the page-in data, the HV Control 330 may separate the page-in data into portions and performs error correction on the page-in data one portion at a time by reading out each portion of the page-in data, performing error detection and correction on the each portion, and writing the corrected portion back into BufA before reading out the next portion of the page-in data for error correction.

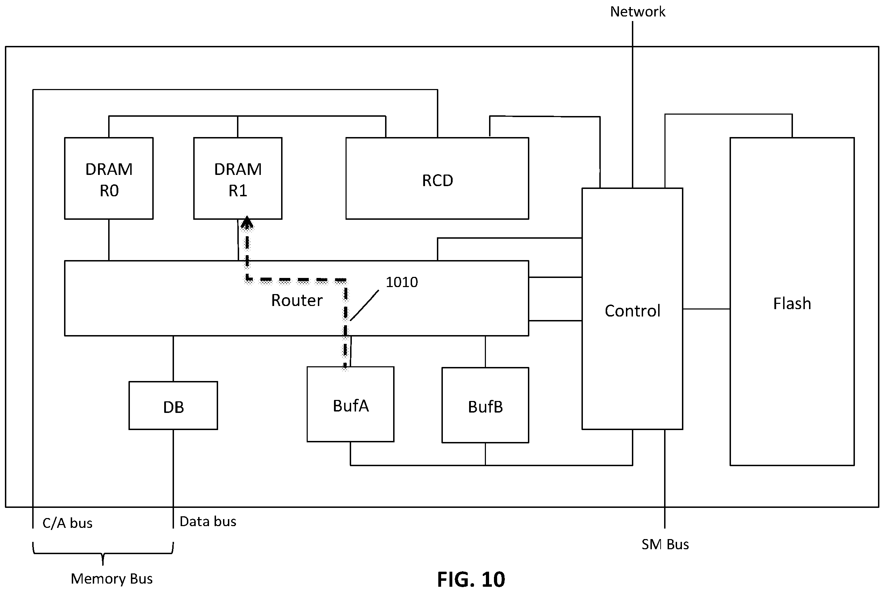

While the HVDIMM 300 is preparing for the page-in data, as described above, the HV Control 330 directs the router 350 to form a data path 930, as shown in FIG. 9, which allows the HVDIMM 330 to perform normal main memory operations in response to commands from the system. When the HV Control 330 completes the data transfers and error corrections discussed above, the HV Control 330 may send an interrupt to the HV driver 250 (725) via, for example, the SM bus. In response, the HV driver initiates a dummy write operation by causing the memory controller to send a third set of C/A signals including a write command and a write address to the HVDIMM 300. In certain embodiments, the dummy write command is like a normal write command except that it is followed with dummy data or no data from the memory controller. The third set of C/A signals are received by both the RCD and the HV Control 330. The HV Control 330 recognizes the third set of C/A signals as being part of the page fault operation because the read address is related to the address in the first or second set of C/A signals. In response, the HV Control 330 sends a read command to BufA, which causes BufA to output the page-in data. The HV Control 330 also directs the router 350 to form a data path 1010, as shown in FIG. 10, to route the page-in data to the HV-DRAM 310, which receives the page-in data in response to the C/A signals from the RCD that are derived from the third set of C/A signals. The dummy data from the memory controller is thus ignored or discarded.

In certain embodiments, normal system access to the main memory is conducted between the system and the HV-DRAM 310, without much involvement from the HV driver 350 or the HV Control 330. In certain embodiments, the memory interfaces in the computer system 100 are designed to be slave interfaces without per command handshake provision. So, the system does not have knowledge about whether any on-DIMM (intra-module) activities are occupying the DRAM input/output (I/O) pins in the HV-DRAM 310. For example, if the DRAM I/Os are being occupied for transferring data between main memory and storage, and the system (memory controller) initiates a data read or write command with the expectation that the DRAMs would be ready to execute the system command, the DRAMs would fail to execute the system read/write operation and the system would experience a 'memory failure', which may lead to a system failure.

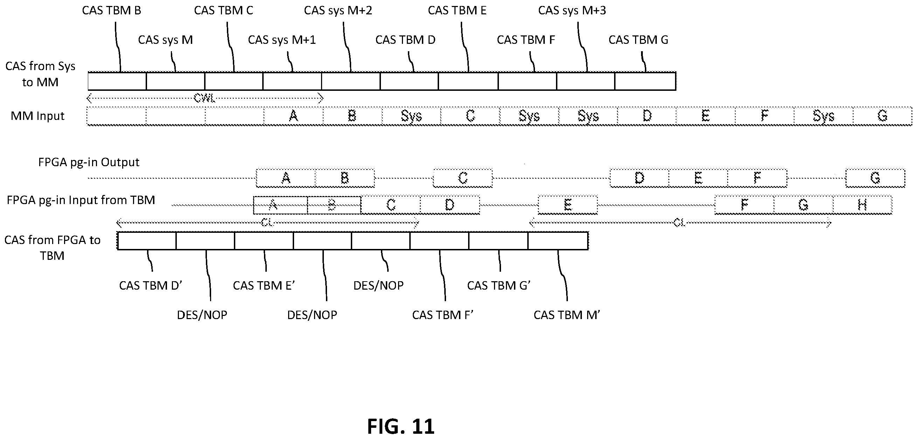

In certain embodiments, the HV Control 330 reads the page-in data from BufB and then provides the page-in data from the HV Control 330 to the HV-DRAM 310 in response to the dummy write command from the system. The HV control is confgured to monitor the memory commands from the memory controller and schedule on-DIMM (intra-module) data transfers accordingly to avoid data access conflicts. In certain embodiments, the HV Control 330 would work around system memory accesses when placing the page-in data at the DRAM I/Os, so as to avoid system failure caused by such data access conflicts. For example, as illustrated in FIG. 11, as data A thruogh G are being paged in from the buffer memory 340 (TBM) to the main memory (MM), the system may also be issuing memory access commands to write data M, M+1, M+2, M+3 into the main memory (MM). The memory controller may schedule the memory commands from the system and the dummy write commands from the HV driver 350 as follows:
CAS TBM A (not shown) - which is a dummy write command from the HV driver 350 to transfer data A from TBM to main memory (MM);
CAS TBM B - which is a dummy write command from the HV driver 350 to transfer data B from TBM to main memory (MM);
CAS sys M - which is a normal write command to write data M from system into MM;
CAS TBM C - which is a dummy write command from the HV driver 350 to transfer data C from TBM to main memory (MM);
CAS sys M+1 - which is a normal write command to write data M+1 from system into MM;
CAS sys M+2 - which is a normal write command to write data M+2 from system into MM;
CAS TBM D - which is a dummy write command from the HV driver 350 to transfer data C from TBM to main memory (MM);
CAS TBM E - which is a dummy write command from the HV driver 350 to transfer data C from TBM to main memory (MM);
CAS TBM G - which is a dummy write command from the HV driver 350 to transfer data C from TBM to main memory (MM);
CAS sys M+3 - which is a normal write command to write data M+3 from system into MM; and
CAS TBM H (not shown) - which is a dummy write command from the HV driver 350 to transfer data H from TBM to main memory (MM).
Before the system issues the CAS TBM B command, the HV Control 330 (referred to in the figure as "FPGA") may have issued CAS TBM A', CAS TBM B', and CAS TBM C' commands to BufA to output data A, data B, and data C to the HV Control 330. The HV Control may preload data A and data B from the TBM (as shown by the data blocks A and B in the "FPGA pg-in input from TBM") and place it in the data buffer 420 in the HV Control. Afterwards, data C is output from the TBM in response to CAS TBM C' from the HV Control.

The HV Control continues to issue CAS TBM D' to the TBM when the HV Control observed the CAS sys M command from the system. In response, the HV Control issues a DES/NOP command to the TBM to pause the data transfer between the TBM and the MM Thus, FPGA page-in (Pg-in) output is paused, as shown by the gap between data B and data C in the FPGA Pg-in output, and system data M (Sys) is received at the MM input. Afterwards, the HV Control continues to issue CAS TBM E' to the TBM when it observed CAS sys M+1 and later CAS sys M+2 from the system. In response, the HV Control issues two consecutive DES/NOP commands to pause the TBM from outputting data to the HV Control. As a result, no data is output between data E and data F from the TBM, and no data between data C and data D is driven from the HV Control to the MM, leaving a gap in the HV Control output to the MM to allow the MM to take system data M+1 and M+2 (Sys).

In certain embodiments, the HV Control 330 is further configured to perform shadowed data transfer operations between the HV-DRAM 310 and the HV-Flash 320. For example, when a system command targets a DRAM address that has been preprogrammed as an address that requires data to be transferred from the HV-Flash 320, the HV Control 330 would perform such a transfer to enable proper system access to this preprogrammed address.

In certain embodiment, the HVDIMM on the memory bus is a slave device in that it does not initiate communications with the system except through the asynchronous (e.g., I²C) interface. Thus, the system can send commands via the memory bus, but the HVDIMM 300 responds via the SM bus when sending the interrupt to the HV driver 250 to indicate completion of on-DIMM data transfers. The HV driver 250 generally takes microseconds to handle these signals. Thus, the performance of the system 100 suffers due to the relatively long handling time of asynchronous interface signals. Thus, notifying the system via asynchronous interface can cause hundreds of microseconds or more read latency.

To avoid the read latency associated with the asynchronous interface, a polling protocol can be implemented, which allows the system to periodically monitor readiness status of data transfers in the HVDIMM. Polling for the readiness status, however, may require a number of tries, and each polling activity needs to be scheduled by the system memory controller, resulting in reduction of valuable main memory bandwidth for regular memory access activities.

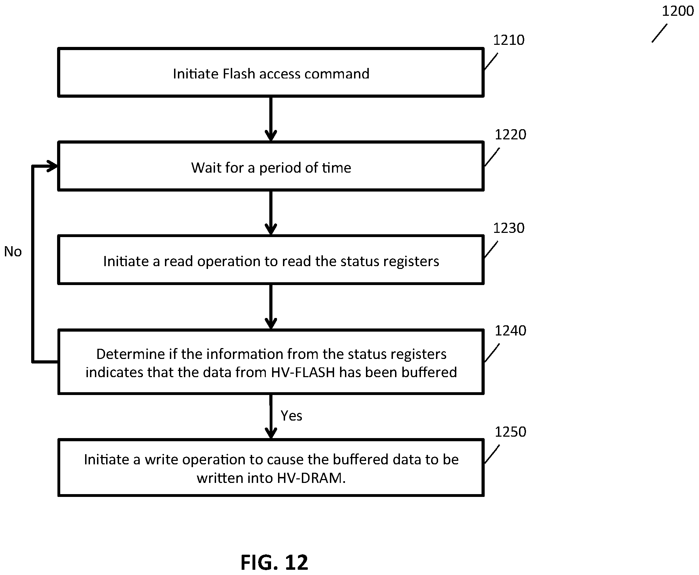

In certain embodiment, the registers 440 in the HV Control 330 includes status registers to store data transfer status information, and the system (e.g., the HV driver 250) carries out a "prediction and correction" method 1200 for each storage read operation, as illustrated in FIG. 12. In certain embodiments, the HV driver 250 keeps a memory space for the status registers (i.e., the status register space), which is a virtual DRAM address space that exists in a system address space of the system 100, although there is no physical DRAM associated with it. The HV-driver initiates write or read commands to the status register space for writing into or reading from the status registers.

In certain embodiment, the prediction and correction method 1200 comprises: initiating a NV access request (1210). This can be done by, for example, initiating a page fault operation using, for example, process 703 discussed above with reference to FIG. 7, or any other operation involving transferring data out of (or into) the HV-FLASH 320. The HV driver 330 then predicts a period of time it may take for the HVDIMM to perform the data transfers based on historical data and based on the size of the data being transferred from HV-FLASH 320. The HV driver waits for the period of time to pass (1220) before initiating a memory read operation addressed to the status registers space to read the information in the status registers (1230), and determines if the information from the status registers indicates that the data from HV-FLASH 320 has been buffered in the buffer memory 340 (1240). If the information from the status register indicates that the data has been buffered, the HV driver 250 initiates a write operation to cause the buffered data to be written into HV-DRAM (1250). Otherwise, the HV driver 250 waits an additional period of time before reading the status registers again and repeats the above process. The additional amount of time can be determined based on information from the status registers.

In certain embodiments, in response to receiving the NV access request, the HV Control 330 receives and deciphers the data associated with the NV access request, which includes information regarding the location of the storage data to be read from the HV-Flash 320. The HV Control 330 then issues a Flash read command to transfer the storage data from the Flash to the buffer memory 340, monitors the data transfer, and updates the information in the status registers accordingly.

In certain embodiments, the registers 440 in the HV Control 330 further comprises NV access queue registers, or the status registers can be used as NV access queue registers. The HV Control 330 queues NV access requests from the system using the NV access queue registers, and computes an "estimated wait time" for each NV access request queued in the NV access queue registers. The estimated wait time is updated periodically based on historical data transfer rates and the number of previously queued NV access requests. When the data transfer from the Flash to the buffer memory 340 is completed, a ready bit is set in the status registers, and the corresponding "estimated wait time" is updated to be zero.

For example, if the storage data requested by a NV access request is 1MB in size, the HV controller starts a timer as it starts the data transfer. It measures how long it takes to move each of multiple 10KB chunks of the 1MB storage data, and calculates the average time (e.g., 1 microsecond or µsec) to move a 10KB chunk of storage data. Based on how many 10kB chunks are left for each data transfer, the controller calculates the remaining time for the data transfer, and updates the status registers storing the estimated wait time to reflect the remaining time as the storage data is being moved to the buffer memory 340.

For example, if there are 4 queued commands, a first command having its storage data currently being transferred, a second command for moving 1MB of storage data, a third command for moving 2MB of storage data, and fourth command for moving 1MB of storage data. Assuming that the current data transfer has about 10 µsec left to complete, the estimate wait time for these commands would be:
First Command (in Queue 0) - 10 µsec,
Second Command (in Queue 1) - 110 µsec,
Third Command (in Queue 2) - 310 µsec, and
Fourth Command (in Queue 3) - 410 µsec.

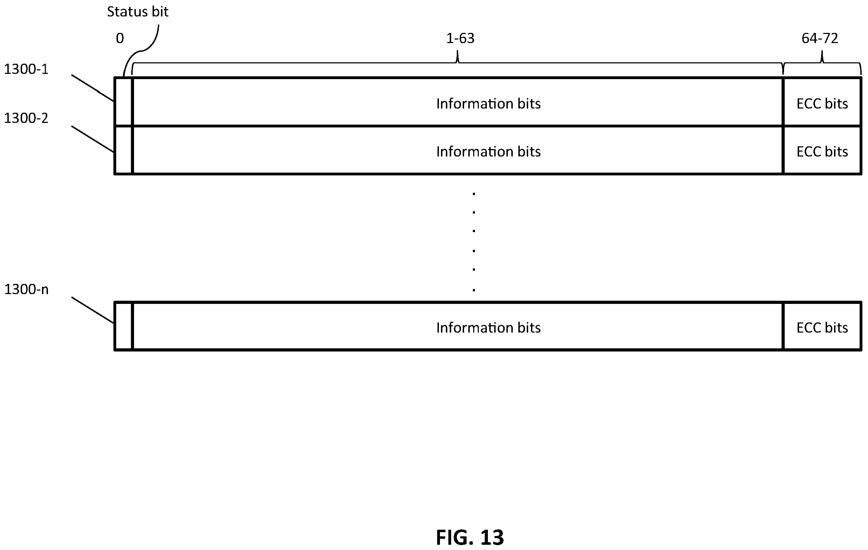

These estimated wait time is stored in the status registers together with the respective ready bit, and is updated periodically (e.g., every 10 µsec). In certain embodiments, the status data for each respective command is represented by a set of status bits including a ready bit (e.g., bit 0) indicating completion of the associated data transfer and a plurality of information bits storing further status information associated with the respective command, such as the respective estimated wait time to completion, as shown in FIG. 13, which illustrates n sets of status registers, 1300-1, 1300-2, ..., 1300-*n*, each for storing the status bits and associated ECC code for a respective queued command. The system knows which queued command each set of status registers represent based on the order of the queued or uncompleted commands whose data has not been read out. When the system reads the status registers, and the ready bit is set, the system can proceed to read the data from the buffer memory 340. If the ready bit is not set, the system may read the "estimated wait time", and wait for that period before issuing the read command to read the storage data or re-reading the status registers.

Thus, in the above example, if the system reads out the buffered storage data after 20 µsec, data associated with the first command should be ready and read out, while each of the other queued commands are moved up in queue with the following status information:
Second Command (in Queue 0) - 90 µsec,
Third Command (in Queue 1) - 290 µsec,
Fourth Command (in Queue 2) - 390 µsec, and
Fifth Command (in Queue 3) - xxx.

If the system does not read out the buffered storage data for 500 µsec, then the wait time may be (after 500 µsec)
First Command (in Queue 0) - 0 µsec (data is ready and the ready bit is set),
Second Command (in Queue 1) - 0 µsec (data is ready and the ready bit is set),
Third Command (in Queue 2) - 0 µsec (data is ready and the ready bit is set), and
Fourth Command (in Queue 3) - 0 µsec (data is ready and the ready bit is set)

Thus, the system can accumulate data read out operations, and execute them all together based on the information from the status registers.

In certain embodiments, each set of status registers 1200 also includes ECC bits for storing an ECC code associated with the respective status data. An ECC-capable memory controller as used in many modern personal computers, and most medium to high-end workstation and server systems, can use the ECC code that comes with each data word to detect and correct a single-bit errors per 64-bit data word (i.e., a unit of bus transfer), and detect (but not correct) a two-bit error per 64-bit data word. The memory controller may drop the status data unless the ECC is checked out correctly.

In certain embodiments, to produce the correct ECC for the status data, the HV driver 250 causes the memory controller to write various pre-defined status code into the HVDIMM 300 that covers most or all possible status situations. The system memory controller would assert the correct ECC code prior to writing the pre-define status code to addresses assigned to the internal memory of the HV Control 330. The HV Control 330 stores each pre-defined 64-bit status code along with its ECC byte into the registers or local memories in the HV Control 330, and updates the status registers using the pre-defined status code along with its ECC code. For example, if the HV Control 330 needs to update a set of status registers for a queued NV access request with the status information of "90 µsec estimate wait time till completion," the HV Control 330 would look up the predefined status code corresponding to this status information in its local memories and update the set of status registers with the predefined status code and its associated ECC code. When the system requests for the status of the NV access request by reading the status register, the HV Control 330 can simply read the pre-defined status code along with the correct ECC from the status registers, and sends that out to the system.

In certain embodiments, the status registers can also be used to store other status information, such as the "healthiness of the Flash" on a HVDIMM, the remaining life time of the Flash storage, any statistical data collected during the operations, etc.

Thus, the system can avoid implementing the polling protocol and use intead a dynamic and synchronous communication interface to obtain status information from the HVDIMM 300 via the memory bus. The system also can dynamically schedule CPU activities (process queue) efficiently based on the information it gets from the status registers.

In certain embodiments, the memory controller performs ECC encoding / decoding and interleaving amongst the sockets (CPUs), channels and ranks to improve the error handling capability. The memory controller performs these operations both on address and on data. Thus, the system address and data (including the cache) has one-to-one mapping to the DIMM address space. Any particular mapping, however, is usually only valid for a particular version of server platform with a particular version of BIOS and Memory Reference Code (MRC). The Memory Reference Code (or MRC) in some computers determines how the computer's memory (RAM) will be read and written, and adjusts memory timing algorithms correctly for the effects of any modifications set by the user or computer hardware. In other words, even for a same platform, if a new version of BIOS or MRC is installed, the translation mapping is likely to become invalid. Thus, for HVDIMM 300, a designer either needs to target for a particular version of server platform and BIOS/MRC, or needs to find a way to overcome the issue associated with the uncertainty of the server platform and BIOS/MRC variation. This issue becomes more important for HVDIMMs that support a DRAM main memory space as well as a storage space since these two address spaces do not always co-exist on the memory table.

In certain embodiments, the system used a Memory Mapped I/O (MMIO) access protocol to access the storage space of the HVDIMM 300, allowing the system to distinguish the system address space from the storage space. This MMIO space may not be in the traditional MMIO system address space. For example, non-uniform memory access (NUMA) is defined in the 3.75GB - 4GB system address. Since the system address decoder gives higher priority to target the traditional MMIO decoding for this range over the main memory address decoding, defining the MMIO space for the HVDIMM 300 in the traditional MMIO space may not work correctly. Thus, in certain embodiments, the MMIO space for the HVDIMM 300 is defined in the main memory space, and is thus different from the traditional MMIO space. For that reason, the MMIO space for the HVDIMM 300 is referred to herein as Pseudo MMIO (PMMIO) space.

In certain embodiments, to be able to access the storage space in an HVDIMM via the memory bus, the system has knowledge about which system address space actually maps to the Flash memory space 620, and tag those memory spaces as the PMMIO space for the

### HVDIMM

In certain embodiments, instead of developing a generalized mapping table to embrace all the variables (i.e. the platform version, BIOS version and MRC version) mapping table, an automatically configurable mapping table is developed to provide a relationship between the system address (physical address) and the DIMM address for a particular system that contains one or more HVDIMMs.

The automatically configurable mapping table contains the DIMM and Rank numbers that associate with the system address. This mapping table can be a set of arithmetic expression of a mapping or actual look up table, and is built on the fact that the address relationship (one-to-one) does not alter while a system is in operation. This also means that the table can be configured during boot-up and initialization period, and will be valid though out the operation.

In certain embodiments, the following procedures are employed to configure the mapping or lookup table:
- Set up a DIMM population rule;
- In an on-DIMM serial presence detect (SPD) device, code the DIMM density bigger than the actual DRAM density (e.g., for a DIMM with 8GB DRAM density, the SPD is configured as a 16GB DIMM);
- Read the BIOS/MRC registers for interleaving, offset configuration;
- Reverse map the DIMM address into the system address; and
- Mark the address space for the non-existent DRAM space as reserved space for PMMIO operations, thus creating a NV access address space.

This reserved space is not likely a contiguous system address space due to the socket, channel and rank interleaving. The HV driver 250 uses this reserved address space as the PMMIO space for the particular HVDIMM. The HV Control 330 recognizes any address targeting the NV access address space as the MMIO command access, and deciphers the associated data as the MMIO command.

The NV access space on the DIMM can be used to support any data transfer between the HV-FLASH and the system. It also helps to support on DIMM data transfer between the main memory DRAM and the Flash without going through the buffer in the CPU. This can be done by building a memory association table that maps system addresses to the associated DIMM locations along with the physical HV-FLASH locations. The association table can be stored as one of the lookup tables 260, as shown in FIG. 2 and accessible by the HV driver 250.

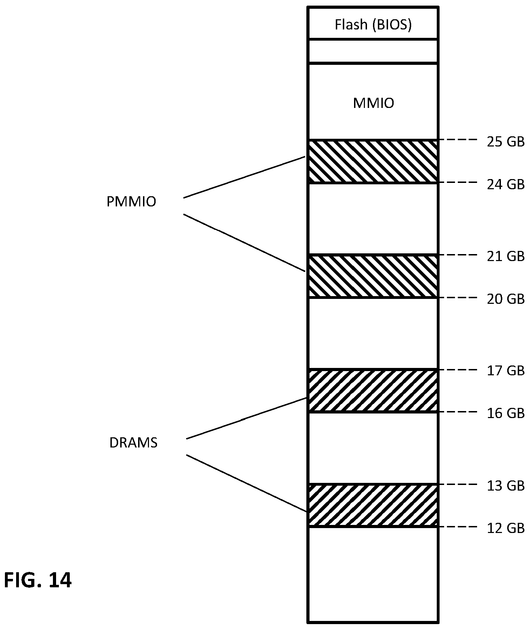

For example, as shown in FIG. 14, the system address for the DRAMs on Socket (CPU) 0, Channel 0, HVDIMM 0 is reverse mapped to 12GB - 13GB and 16GB -17GB. The PMMIO space for the same HVDIMM is mapped to system address space 20GB - 21GB and 24GB-25GB. The system can associate these address spaces such that data can be transferred between the PMMIO space 20GB-21GB/24GB-25GB and the DRAM space 12GB-13GB/16GB-17GB.

One effective use of this association mapping is that the main memory data (DRAM) swap space can be built into the HVDIMM on the same DIMM, and the data swap can occur directly without any involvement of the buffer in CPU. This also allows swapping (e.g., page-in or page-out) very large data size without overhead by executing on-DIMM direct data transaction, as discussed above with reference to FIGS. 7-10.

Thus, the storage in the HVDIMM 300 can be efficiently used without being limited to a particular server platform or BIOS or MRC.

## Claims

1. A memory module (300) operable in a computer system (100), the computer system (100) including a memory controller coupled to a system memory bus, the system memory bus including a data bus and a control/address bus, comprising:
a printed circuit board (301);
a volatile memory subsystem (310) mounted on the printed circuit board (301) and coupled to the system memory bus, the volatile memory subsystem (310) including double data rate dynamic random access memory (DRAM R0; DRAM Rl);
a non-volatile memory subsystem (320) mounted on the printed circuit board (301);
buffer memory (340); and
a module control device (330) mounted on the printed circuit board (301) and coupled to the volatile memory subsystem (310), the non-volatile memory subsystem (320), the buffer memory (340) and the system memory bus, wherein the module control device (330) is configured to transfer first data from the non-volatile memory subsystem (320) to the buffer memory (340) in response to a non-volatile access request received via the system memory bus, wherein the module control device (330) is further configured to respond to a dummy write memory command received via the control/access bus by causing at least a portion of the first data to be output from the buffer memory (340), and wherein the volatile memory subsystem (310) is configured to receive the dummy write memory command from the control/address bus and to receive the at least a portion of the first data in response to the dummy write memory command.

2. The memory module (300) of claim 1, wherein the buffer memory (340) includes a first memory (BufA) and second memory (BufB), wherein the module control device (330) is configured to transfer the first data from the non-volatile memory subsystem (320) to the first memory (BufA) and second data from the volatile memory subsystem (310) to the second memory (BufB) in response to the non-volatile access request received via the system memory bus, and wherein the module control device (330) is further configured to respond to the dummy write memory command received via the control/access bus by causing the at least a portion of the first data to be output from the first memory (BufA).

3. The memory module (300) of claim 2, wherein the module control device (330) is further configured to transfer the second data from the second memory (BufB) to the non-volatile memory subsystem (320), and wherein the module control device (330) is further configured to perform error correction on the first data stored in the first memory (BufA) while transferring the second data from the second memory (BufB) to the non-volatile memory subsystem (320).

4. The memory module (300) of any one of the preceding claims, wherein the module control device (330) includes status registers (440) accessible by the computer system (100) via the system memory bus, the status registers (440) is configured to store status bits for the non-volatile access request, and wherein the module control device (330) is configured to provide the status bits to the memory controller via the system memory bus in response to a read command and a read address received from the memory controller, the read address being in an address space assigned to the status registers (440).

5. The memory module (300) of claim 4, wherein the status registers (440) is further configured to store an ECC code associated with the status bits, and wherein the module control device (330) is configure to provide the ECC code along with the status bits.

6. The memory module (300) of claim 4, wherein the status bits include information regarding an estimated wait time for the first data to be transferred to the buffer memory (340).

7. The memory module (300) of claim 1, further comprising a serial presence detect device (370) coded with a memory density bigger than a memory density of the volatile memory subsystem (310) thereby allowing for a non-volatile access address space that is outside a memory address space for the volatile memory subsystem (310), wherein the non-volatile access request includes an address in the non-volatile access address space.

8. The memory module (300) of claim 4, wherein the status registers (440) are further configured to store an ECC code associated with the status bits, and wherein the module control device (330) is further configured to provide the ECC code along with the status bits.

9. The memory module (300) of claim 4, wherein the status bits include information regarding an estimated wait time for the first data to be transferred to the buffer memory (340).

10. A method of operation of a memory module (300) in a computer system (100), the computer system (100) including a memory controller coupled to the memory module (300) via a system memory bus, the system memory bus including a data bus and a control/address bus, the memory module (300) including a volatile memory subsystem (310) and a non-volatile memory subsystem (320), the volatile memory subsystem (310) including double data rate dynamic random access memory (DRAM R0; DRAM R1), the method comprising:
receiving a non-volatile access request via the system memory bus;
reading first data from the non-volatile memory subsystem (320) and reading second data from the volatile memory subsystem (310) in response to the non-volatile access request;
writing first data into first buffer memory;
writing second data into second buffer memory;
receiving a dummy write memory command at the volatile memory subsystem via the control/access bus;
causing at least a portion of the first data to be output from the first buffer memory in response to the dummy write memory command; and
writing the at least a portion of the first data into the volatile memory subsystem (310) in response to the dummy write memory command.

11. The method of claim 10, wherein the at least a portion of the first data is written into the first buffer memory concurrently with at least a portion of the second data being written into the second buffer memory.

12. The method of claim 10, further comprising:
transferring the second data from the second memory (BufB) to the non-volatile memory subsystems (320); and
performing error correction on the first data stored in the first memory (BufA) concurrently with at least a portion of the second data transferred from the second memory (BufB) to the non-volatile memory subsystems (320).

13. The method of claim 10, wherein receiving the non-volatile access request includes receiving a set of control/address signals via the control/address bus and receiving a set of data signals via the data bus, the set of data signals including information about one or more locations in the non-volatile memory subsystem (320).

14. The method of claim 10, further comprising storing status information for the non-volatile access request, and providing the status information to the memory controller via the system memory bus in response to a read command received from the system memory bus for reading the status information.

15. The method of claim 14, further comprising storing an ECC code associated with the status information, and providing the ECC code along with the status information.

16. The method of claim 14, wherein the status information includes information regarding an estimated wait time for the first data to be stored into a buffer memory (340) before being written into the volatile memory subsystem (310).

## Patentansprüche

1. Speichermodul (300), das in einem Computersystem (100) betreibbar ist, wobei das Computersystem (100) einen Speichercontroller aufweist, der mit einem Systemspeicherbus verbunden ist, wobei der Systemspeicherbus einen Datenbus und einen Steuer-/Adressbus aufweist, mit:
einer gedruckten Leiterplatte (301);
einem flüchtigen Speicher-Subsystem (310), das auf der gedruckten Leiterplatte (301) angebracht und mit dem Systemspeicherbus verbunden ist, wobei das flüchtige Speicher-Subsystem (310) einen Dynamic Random Access Memory mit doppelter Datenrate (DRAM R0; DRAM R1) aufweist;
einem nicht flüchtigen Speicher-Subsystem (320), das auf der gedruckten Leiterplatte (301) angebracht ist;
einem Pufferspeicher (340); und
einer Modulsteuervorrichtung (330), die auf der gedruckten Leiterplatte (301) angebracht und mit dem flüchtigen Speicher-Subsystem (310), dem nicht flüchtigen Speicher-Subsystem (320), dem Pufferspeicher (340) und dem Systemspeicherbus verbunden ist, wobei die Modulsteuervorrichtung (330) dazu konfiguriert ist, erste Daten von dem nicht flüchtigen Speicher-Subsystem (320) im Ansprechen auf eine nicht flüchtige Zugriffsanfrage, die über den Systemspeicherbus empfangen wird, an den Pufferspeicher (340) zu übertragen, wobei die Modulsteuervorrichtung (330) des Weiteren dazu konfiguriert ist, auf einen Dummy-Schreibspeicherbefehl zu antworten, der über den Steuer-/Zugriffsbus empfangen wird, durch Veranlassen, dass wenigstens ein Teil der ersten Daten von dem Pufferspeicher (340) ausgegeben wird, und wobei das flüchtige Speicher-Subsystem (310) dazu konfiguriert ist, den Dummy-Schreibspeicherbefehl von dem Steuer-/Adressbus zu empfangen und wenigstens den Teil der ersten Daten im Ansprechen auf den Dummy-Schreibspeicherbefehl zu empfangen.

2. Speichermodul (300) nach Anspruch 1, wobei der Pufferspeicher (340) einen ersten Speicher (BufA) und einen zweiten Speicher (BufB) aufweist, wobei die Modulsteuervorrichtung (330) dazu konfiguriert ist, die ersten Daten von dem nicht flüchtigen Speicher-Subsystem (320) an den ersten Speicher (BufA) zu übertragen, und zweite Daten von dem flüchtigen Speicher-Subsystem (310) an den zweiten Speicher (BufB) zu übertragen, im Ansprechen auf die nicht flüchtige Zugriffsanfrage, die über den Systemspeicherbus empfangen wird, und wobei die Modulsteuervorrichtung (330) des Weiteren dazu konfiguriert ist, auf den über den Steuer-/Zugriffsbus empfangenen Dummy-Schreibsteuerbefehl zu antworten, indem sie veranlasst, dass wenigstens der Teil der ersten Daten von dem ersten Speicher (BufA) ausgegeben wird.

3. Speichermodul (300) nach Anspruch 2, wobei die Modulsteuervorrichtung (330) des Weiteren dazu konfiguriert ist, die zweiten Daten von dem zweiten Speicher (BufB) an das nicht flüchtige Speicher-Subsystem (320) zu übertragen, und wobei die Modulsteuervorrichtung (330) des Weiteren dazu konfiguriert ist, Fehlerkorrektur für die in dem ersten Speicher (BufA) gespeicherten ersten Daten durchzuführen, während die zweiten Daten von dem zweiten Speicher (BufB) an das nicht flüchtige Speicher-Subsystem (320) übertragen werden.

4. Speichermodul (300) nach einem der vorhergehenden Ansprüche, wobei die Modulsteuervorrichtung (330) Statusregister (440) aufweist, auf die von dem Computersystem (100) über den Systemspeicherbus zugegriffen werden kann, wobei die Statusregister (440) dazu konfiguriert sind, Statusbits für die nicht flüchtige Zugriffsanfrage zu speichern, und wobei die Modulsteuervorrichtung (330) dazu konfiguriert ist, die Statusbits über den Systemspeicherbus im Ansprechen auf einen Lesebefehl und eine Leseadresse, die von dem Speichercontroller empfangen werden, an den Speichercontroller zu liefern, wobei sich die Leseadresse in einem Adressraum befindet, der den Statusregistern (440) zugewiesen ist.

5. Speichermodul (300) nach Anspruch 4, wobei die Statusregister (440) des Weiteren dazu konfiguriert sind, einen ECC-Code zu speichern, der zu den Statusbits zugehörig ist, und wobei die Modulsteuervorrichtung (330) dazu konfiguriert ist, den ECC-Code zusammen mit den Statusbits bereitzustellen.

6. Speichermodul (300) nach Anspruch 4, wobei die Statusbits Informationen hinsichtlich einer geschätzten Wartezeit für die Übertragung der ersten Daten an den Pufferspeicher (340) aufweisen.

7. Speichermodul (300) nach Anspruch 1, das des Weiteren eine serielle Präsenzdetektionsvorrichtung (370) aufweist, die mit einer Speicherdichte codiert ist, die größer als eine Speicherdichte des flüchtigen Speicher-Subsystems (310) ist, wodurch ein nicht flüchtiger Zugriffsadressraum ermöglicht wird, der sich außerhalb eines Speicheradressraums für das flüchtige Speicher-Subsystem (310) befindet, wobei die nicht flüchtige Zugriffsanfrage eine Adresse in dem nicht flüchtigen Zugriffsadressraum aufweist.

8. Speichermodul (300) nach Anspruch 4, wobei die Statusregister (440) des Weiteren dazu konfiguriert sind, einen ECC-Code zu speichern, der zu den Statusbits zugehörig ist, und wobei die Modulsteuervorrichtung (330) des Weiteren dazu konfiguriert ist, den ECC-Code zusammen mit den Statusbits bereitzustellen.

9. Speichermodul (300) nach Anspruch 4, wobei die Statusbits Informationen hinsichtlich einer geschätzten Wartezeit für die Übertragung der ersten Daten an den Pufferspeicher (340) aufweisen.

10. Verfahren zum Betreiben eines Speichermoduls (300) in einem Computersystem (100), wobei das Computersystem (100) einen Speichercontroller aufweist, der über einen Systemspeicherbus mit dem Speichermodul (300) verbunden ist, wobei der Systemspeicherbus einen Datenbus und einen Steuer-/Adressbus aufweist, wobei das Speichermodul ein flüchtiges Speicher-Subsystem (310) und ein nicht flüchtiges Speicher-Subsystem (320) aufweist, wobei das flüchtige Speicher-Subsystem (310) einen Dynamic Random Access Memory mit doppelter Datenrate (DRAM R0; DRAM R1) aufweist, wobei das Verfahren aufweist:
Empfangen einer nicht flüchtigen Zugriffsanfrage über den Systemspeicherbus;
Lesen erster Daten aus dem nicht flüchtigen Speicher-Subsystem (320) und Lesen zweiter Daten aus dem flüchtigen Speicher-Subsystem (310) im Ansprechen auf die nicht flüchtige Zugriffsanfrage;
Schreiben erster Daten in den ersten Pufferspeicher;
Schreiben zweiter Daten in den zweiten Pufferspeicher;
Empfangen eines Dummy-Schreibspeicherbefehls an dem flüchtigen Speicher-Subsystem über den Steuer-/Zugriffsbus;
Veranlassen, dass wenigstens ein Teil der ersten Daten von dem ersten Pufferspeicher im Ansprechen auf den Dummy-Schreibspeicherbefehl ausgegeben wird; und
Schreiben wenigstens des Teils der ersten Daten im Ansprechen auf den Dummy-Schreibspeicherbefehl in das flüchtige Speicher-Subsystem (310).

11. Verfahren nach Anspruch 10, wobei wenigstens der Teil der ersten Daten zur gleichen Zeit in den ersten Pufferspeicher geschrieben wird wie wenigstens ein Teil der zweiten Daten in den zweiten Pufferspeicher geschrieben wird.

12. Verfahren nach Anspruch 10, das des Weiteren aufweist:
Übertragen der zweiten Daten von dem zweiten Speicher (BufB) an die nicht flüchtigen Speicher-Subsysteme (320); und
Durchführen von Fehlerkorrektur für die ersten Daten, die in dem ersten Speicher (BufA) gespeichert sind, zur gleichen Zeit wie wenigstens ein Teil der zweiten Daten von dem zweiten Speicher (BufB) an die nicht flüchtigen Speicher-Subsysteme (320) übertragen wird.

13. Verfahren nach Anspruch 10, wobei das Empfangen der nicht flüchtigen Zugriffsanfrage das Empfangen eines Satzes von Steuer-/Adresssignalen über den Steuer-/Adressbus und das Empfangen eines Satzes von Datensignalen über den Datenbus aufweist, wobei der Satz von Datensignalen Informationen über eine oder mehrere Stellen in dem nicht flüchtigen Speicher-Subsystem (320) aufweist.

14. Verfahren nach Anspruch 10, das des Weiteren das Speichern von Statusinformationen für die nicht flüchtige Zugriffsanfrage aufweist, und das Liefern der Statusinformationen über den System-Steuerbus an den Speichercontroller im Ansprechen auf einen Lesebefehl, der von dem Systemspeicherbus zum Lesen der Statusinformationen empfangen wird.

15. Verfahren nach Anspruch 14, das des Weiteren das Speichern eines ECC-Codes aufweist, der zu den Statusinformationen zugehörig ist, und das Bereitstellen des ECC-Codes zusammen mit den Statusinformationen.

16. Verfahren nach Anspruch 14, wobei die Statusinformationen Informationen hinsichtlich einer geschätzten Wartezeit für das Speichern der ersten Daten in einem Pufferspeicher (340) aufweisen, bevor sie in das flüchtige Speicher-Subsystem (310) geschrieben werden.

## Revendications

1. Module de mémoire (300) utilisable dans un système informatique (100), le système informatique (100) comprenant un contrôleur de mémoire couplé à un bus de mémoire système, le bus de mémoire système comprenant un bus de données et un bus de commande/d'adresse, comprenant :
une carte de circuit imprimé (301) ;
un sous-système de mémoire volatile (310) monté sur la carte de circuit imprimé (301) et couplé au bus de mémoire système, le sous-système de mémoire volatile (310) comprenant une mémoire vive dynamique à double débit de données (DRAM R0 ; DRAM R1) ;
un sous-système de mémoire non volatile (320) monté sur la carte de circuit imprimé (301) ;
une mémoire tampon (340) ; et
un dispositif de commande de module (330) monté sur la carte de circuit imprimé (301) et couplé au sous-système de mémoire volatile (310), au sous-système de mémoire non volatile (320), à la mémoire tampon (340) et au bus de mémoire système, dans lequel le dispositif de commande de module (330) est configuré pour transférer des premières données du sous-système de mémoire non volatile (320) à la mémoire tampon (340) en réponse à une demande d'accès non volatile reçue par l'intermédiaire du bus de mémoire système, dans lequel le dispositif de commande de module (330) est en outre configuré pour répondre à une instruction d'écriture en mémoire fictive reçue par l'intermédiaire du bus de commande/d'accès en amenant au moins une partie des premières données à sortir de la mémoire tampon (340), et dans lequel le sous-système de mémoire volatile (310) est configuré pour recevoir l'instruction d'écriture en mémoire fictive du bus de commande/d'adresse et pour recevoir au moins une partie des premières données en réponse à l'instruction d'écriture en mémoire fictive.

2. Module de mémoire (300) selon la revendication 1, dans lequel la mémoire tampon (340) comprend une première mémoire (BufA) et une seconde mémoire (BufB), dans lequel le dispositif de commande de module (330) est configuré pour transférer les premières données depuis le sous-système de mémoire non volatile (320) vers la première mémoire (BufA) et des secondes données depuis le sous-système de mémoire volatile (310) vers la seconde mémoire (BufB) en réponse à la demande d'accès non volatile reçue par l'intermédiaire du bus de mémoire système, et dans lequel le dispositif de commande de module (330) est en outre configuré pour répondre à l'instruction d'écriture en mémoire fictive reçue par l'intermédiaire du bus de commande/d'accès en amenant au moins une partie des premières données à sortir de la première mémoire (BufA).

3. Module de mémoire (300) selon la revendication 2, dans lequel le dispositif de commande de module (330) est en outre configuré pour transférer les secondes données de la seconde mémoire (BufB) vers le sous-système de mémoire non volatile (320), et dans lequel le dispositif de commande de module (330) est en outre configuré pour effectuer une correction d'erreur sur les premières données stockées dans la première mémoire (BufA) tout en transférant les secondes données de la seconde mémoire (BufB) vers le sous-système de mémoire non volatile (320).

4. Module de mémoire (300) selon l'une quelconque des revendications précédentes, dans lequel le dispositif de commande de module (330) comprend des registres d'état (440) accessibles au système informatique (100) par l'intermédiaire du bus de mémoire système, les registres d'état (440) sont configurés pour stocker des bits d'état pour la demande d'accès non volatile, et dans lequel le dispositif de commande de module (330) est configuré pour fournir les bits d'état au contrôleur de mémoire par l'intermédiaire du bus de mémoire système en réponse à une instruction de lecture et à une adresse de lecture reçues du contrôleur de mémoire, l'adresse de lecture étant dans un espace d'adressage affecté aux registres d'état (440).

5. Module de mémoire (300) selon la revendication 4, dans lequel les registres d'état (440) sont en outre configurés pour stocker un code ECC associé aux bits d'état, et dans lequel le dispositif de commande de module (330) est configuré pour fournir le code ECC en même temps que les bits d'état.

6. Module de mémoire (300) selon la revendication 4, dans lequel les bits d'état comprennent des informations concernant un temps d'attente estimé pour que les premières données soient transférées vers la mémoire tampon (340).

7. Module de mémoire (300) selon la revendication 1, comprenant en outre un dispositif de détection de présence en série (370) codé avec une densité de mémoire supérieure à une densité de mémoire du sous-système de mémoire volatile (310) permettant ainsi un espace d'adressage d'accès non volatile qui se trouve à l'extérieur d'un espace d'adressage mémoire pour le sous-système de mémoire volatile (310), dans lequel la demande d'accès non volatile comprend une adresse dans l'espace d'adressage d'accès non volatile.

8. Module de mémoire (300) selon la revendication 4, dans lequel les registres d'état (440) sont en outre configurés pour stocker un code ECC associé aux bits d'état, et dans lequel le dispositif de commande de module (330) est en outre configuré pour fournir le code ECC en même temps que les bits d'état.

9. Module de mémoire (300) selon la revendication 4, dans lequel les bits d'état comprennent des informations concernant un temps d'attente estimé pour que les premières données soient transférées vers la mémoire tampon (340).

10. Procédé de fonctionnement d'un module de mémoire (300) dans un système informatique (100), le système informatique (100) comprenant un contrôleur de mémoire couplé au module de mémoire (300) par l'intermédiaire d'un bus de mémoire système, le bus de mémoire système comprenant un bus de données et un bus de commande/d'adresse, le module de mémoire (300) comprenant un sous-système de mémoire volatile (310) et un sous-système de mémoire non volatile (320), le sous-système de mémoire volatile (310) comprenant une mémoire vive dynamique à double débit de données (DRAM R0 ; DRAM R1), le procédé comprenant :
recevoir une demande d'accès non volatile par l'intermédiaire du bus de mémoire système ;
lire des premières données du sous-système de mémoire non volatile (320) et lire des secondes données du sous-système de mémoire volatile (310) en réponse à la demande d'accès non volatile;
écrire les premières données dans une première mémoire tampon ;
écrire les secondes données dans une seconde mémoire tampon ;
recevoir une instruction d'écriture en mémoire fictive au niveau du sous-système de mémoire volatile par l'intermédiaire du bus de commande/d'accès ;
faire sortir au moins une partie des premières données de la première mémoire tampon en réponse à l'instruction d'écriture en mémoire fictive ; et
écrire l'au moins une partie des premières données dans le sous-système de mémoire volatile (310) en réponse à l'instruction d'écriture en mémoire fictive.

11. Procédé selon la revendication 10, dans lequel l'au moins une partie des premières données est écrite dans la première mémoire tampon en même temps qu'au moins une partie des secondes données est écrite dans la seconde mémoire tampon.

12. Procédé selon la revendication 10, comprenant en outre :
transférer les secondes données de la seconde mémoire (BufB) aux sous-systèmes de mémoire non volatile (320) ; et
effectuer une correction d'erreur sur les premières données stockées dans la première mémoire (BufA) en même temps qu'au moins une partie des secondes données transférées de la seconde mémoire (BufB) aux sous-systèmes de mémoire non volatile (320).

13. Procédé selon la revendication 10, dans lequel la réception de la demande d'accès non volatile comprend la réception d'un ensemble de commande/d'adresse par l'intermédiaire du bus de commande/d'adresse et la réception d'un ensemble de signaux de données par l'intermédiaire du bus de données, l'ensemble de signaux de données comprenant des informations sur un ou plusieurs emplacements dans le sous-système de mémoire non volatile (320).

14. Procédé selon la revendication 10, comprenant en outre le stockage d'informations d'état pour la demande d'accès non volatile, et la fourniture des informations d'état au contrôleur de mémoire par l'intermédiaire du bus de mémoire système en réponse à une instruction de lecture reçue du bus de mémoire système pour lire les informations d'état.

15. Procédé selon la revendication 14, comprenant en outre le stockage d'un code ECC associé aux informations d'état, et la fourniture du code ECC en même temps que les informations d'état.

16. Procédé selon la revendication 14, dans lequel les informations d'état comprennent des informations concernant un temps d'attente estimé pour que les premières données soient stockées dans une mémoire tampon (340) avant d'être écrites dans le sous-système de mémoire volatile (310).
